# EUROPÄISCHE PATENTANMELDUNG

(11) **EP 4 703 824 A1**
(43) Veröffentlichungstag der Anmeldung: **04.03.2026**
(21) Anmeldenummer: 24197659.6
(22) Anmeldetag: 30.08.2024
(51) Int. Cl.: G05B 19/418

(54) **VERFAHREN ZUM AUSWÄHLEN EINER OPTIMALEN TOPOLOGIE VON KOMPONENTEN EINER ELEKTROTECHNISCHEN INSTALLATION FÜR EINE INDUSTRIELLE ANLAGE**

(71) Anmelder: Murrelektronik GmbH, 71570 Oppenweiler (DE)
(72) Erfinder: Pfestorf, Sebastian, 71570 Oppenweiler (DE); Binder, Sven, 71522 Backnang (DE)
(74) Vertreter: Bösherz Goebel Patentanwälte

(57) **Zusammenfassung**

Die Erfindung betrifft ein Verfahren zum Auswählen einer optimalen Topologie von Komponenten einer elektrotechnischen Installation für eine industrielle Anlage. Ferner betrifft die Erfindung ein Computerprogramm, ein computerlesbares Speichermedium sowie eine Vorrichtung zur Datenverarbeitung zu diesem Zweck.

## Beschreibung

Die vorliegende Erfindung betrifft ein Verfahren zum Auswählen einer optimalen Topologie von Komponenten einer elektrotechnischen Installation für eine industrielle Anlage. Ferner betrifft die Erfindung ein Computerprogramm, ein computerlesbares Speichermedium sowie eine Vorrichtung zur Datenverarbeitung zu diesem Zweck.

### Stand der Technik

In modernen industriellen Anlagen spielt die Optimierung von Topologien, beispielsweise hinsichtlich einer Energieeffizienz, eine zentrale Rolle, sowohl aus technischen, wirtschaftlichen als auch aus ökologischen Gründen. Eine große Herausforderung besteht beispielsweise darin, den Energieverbrauch bei gleichzeitiger Maximierung der Produktionsleistung zu minimieren. Dies erfordert eine detaillierte Analyse und Optimierung der Topologie der verschiedenen Komponenten innerhalb der Anlage.

Die Topologie einer industriellen Anlage umfasst insbesondere eine räumliche Anordnung und die funktionalen Verbindungen zwischen den einzelnen Komponenten, wie Förderbändern, Antriebsmotoren, Steuerungseinheiten, Verbindungsmodulen, Sensoren und Aktoren. Eine effizient gestaltete Topologie ermöglicht beispielsweise die Minimierung von Leistungsverlusten, die Menge an benötigten Komponenten, oder auch die Verbesserung der Betriebsabläufe, was zu einer erhöhten Gesamteffizienz der industriellen Anlage führen kann.

Nachteilhaft bei den bekannten Lösungen ist insbesondere, dass Topologien für industrielle Anlagen meist ohne Berücksichtigung von Optimierungskriterien geplant und festgelegt werden. Es ist daher eine Aufgabe der vorliegenden Erfindung, den voranstehend beschriebenen Nachteil zumindest teilweise zu beheben. Insbesondere ist es Aufgabe der vorliegenden Erfindung, eine verbesserte Optimierung einer Topologie einer industriellen Anlage bereitzustellen.

### Offenbarung der Erfindung

Gegenstand der Erfindung ist ein Verfahren mit den Merkmalen des Anspruchs 1, ein Computerprogramm mit den Merkmalen des Anspruchs 12, eine Vorrichtung zur Datenverarbeitung mit den Merkmalen des Anspruchs 13 sowie ein computerlesbares Speichermedium mit den Merkmalen des Anspruchs 14. Weitere Merkmale und Details der Erfindung ergeben sich aus den jeweiligen Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit dem erfindungsgemäßen Computerprogramm, mit dem computerlesbaren Speichermedium sowie der erfindungsgemäßen Vorrichtung zur Datenverarbeitung, und jeweils umgekehrt, so dass bezüglich der Offenbarung der Erfindung stets auch eine wechselseitige Bezugnahme möglich ist.

Gegenstand der Erfindung ist insbesondere ein Verfahren zum Auswählen einer optimalen Topologie von Komponenten einer elektrotechnischen Installation für eine industrielle Anlage, umfassend die nachfolgenden Schritte, wobei die Schritte wiederholt und/oder nacheinander durchgeführt werden können. Die Komponenten sind insbesondere räumlich dezentral angeordnete und/oder elektrische Komponenten.

Die industrielle Anlage kann als wenigstens eine der nachfolgend genannten Anlagen ausgebildet sein:
- Eine Automatisierungsanlage,
- Eine Produktionsanlage,
- Eine Logistikanlage,
- Eine Produktionsstraße,
- Ein Bearbeitungszentrum,
- Ein Industrieroboter,
- Eine Fertigungsanlage,
- Ein Aggregat,
- Ein Elektrogerät.

Insbesondere kann die Anlage dabei als eine Anlage mit modularem Charakter oder auch als mobile oder bewegliche Anlage ausgebildet sein, bei welcher einzelne Teile der Anlage modular gemäß einer Installationsvorgabe installiert werden. Diese Installation erfolgt zumindest teilweise manuell durch einen Benutzer wie einen Werker.

Die Komponenten können Verbindungsmodule sein, welche eine dezentrale und modulare Verbindung von Installationselementen ermöglichen. Dezentral kann sich dabei darauf beziehen, dass die Verbindungsmodule zumindest teilweise einen zentralen Schaltschrank ersetzen, indem die Verbindungsmodule zwar jeweils nur einen Teil der Verbindungen für die Maschine bereitstellen, diese Verbindungen aber dezentral im Feld ermöglichen. Bei einer zentralen Topologie, also bspw. einem zentralisierten Schaltschrankkonzept, wird insbesondere von einer Punkt-zu-Punkt-Verbindung gesprochen, d.h. der Startpunkt, die Verbindung und der Endpunkt sind klar definiert. Im Gegensatz dazu ist es bei dezentralen Anwendungen möglich, bzw. kann sogar oftmals notwendig sein, zwischen dem Startpunkt und dem Endpunkt mehrere Komponenten anzuordnen oder zu verbinden. In diesem Fall kann z. B. von einer Modul-Modul oder Modul-Hub-Punkt-Verbindung gesprochen werden. Grundsätzlich können bei einer Maschine bspw. die folgenden Komponenten vorgesehen sein: Geräte wie Aktoren und/oder Sensoren, die Verbindungsmodule, Installationselemente, bspw. zur Verkabelung.

Die Topologie der industriellen Anlage beschreibt insbesondere eine Anordnung und Verbindung von physischen und logischen Komponenten innerhalb der industriellen Anlage. Dazu gehören beispielsweise Maschinen, Verbindungsmodule, Steuerungssysteme, Sensoren, Aktoren, Netzwerke und deren Kommunikation. Eine solche Topologie gibt beispielsweise Auskunft über eine Anordnung der Maschinen und Geräte, d.h. eine Beschreibung einer physischen Platzierung der verschiedenen Maschinen und Geräte innerhalb der Anlage. Ferner kann eine Netzwerkstruktur beschrieben sein, d.h. insbesondere eine Verbindung der Maschinen, Steuerungssysteme und anderer Komponenten durch Kommunikationsnetzwerke wie Ethernet, Feldbusse oder drahtlose Netzwerke. Zudem kann eine Steuerungshierarchie beschrieben sein, d.h. insbesondere eine Hierarchie der Steuerungssysteme, von zentralen Leitsystemen bis hin zu dezentralen Steuerungen. Auch kann ein Fluss von Informationen zwischen den verschiedenen Komponenten, einschließlich der Sensoren, die Daten an Steuerungssysteme senden, und der Aktoren, die von diesen Systemen gesteuert werden, beschrieben sein. Zuletzt kann die Topologie auch eine Beschreibung einer Energieverteilung umfassen, die zeigt, wie Energie innerhalb der Anlage verteilt und an die verschiedenen Maschinen und Geräte geliefert wird.

In einem ersten Schritt werden vorzugsweise Daten hinsichtlich jeweiliger Betriebszustände einer jeweiligen Komponente auf Basis einer Auswertung von Steuerungsdaten der industriellen Anlage bereitgestellt. Die Steuerungsdaten können auch Planungsdaten sein, beispielsweise im Sinne eines Ablaufdiagramms. Das Bereitstellen kann ein Auslesen einer entsprechenden Steuerungssoftware umfassen, wobei die Steuerungssoftware die Steuerungsdaten umfasst oder bereitstellt. Ein Betriebszustand kann beispielsweise ein einfacher Status im Sinne von "Aktiv", bzw. "Eingeschaltet" oder "Inaktiv", bzw. "Ausgeschaltet" sein. Die jeweiligen Betriebszustände der Komponente können angeben, wie die Komponente während eines Betriebs der industriellen Anlage angesteuert wird, wobei die Daten hinsichtlich der Betriebszustände eine Leistung bei der Ansteuerung und/oder einen zeitlichen Verlauf der Ansteuerung angeben. In anderen Worten können die Daten beschreiben, wann und mit welcher Leistung die Komponente während des Betriebs der industriellen Anlage angesteuert wird, beispielsweise könnte ein Förderband durchgehend mit einer Geschwindigkeit von 5 m/s betrieben werden. Die Daten können digitale Daten sein.

In einem weiteren Schritt wird vorzugsweise ein jeweiliger durch die Komponente benötigter Leistungswert für eine festgelegte Topologie auf Basis der bereitgestellten Daten ermittelt. Der Leistungswert kann eine elektrische Leistung sein und in kW angegeben werden. Alternativ oder zusätzlich kann der Leistungswert ein Stromverbrauch der Komponente sein und beispielsweise in kW/h angegeben werden. Auch ist denkbar, dass in einem zweiten Schritt auf Basis des Leistungswertes als elektrische Leistung unter Berücksichtigung der Daten hinsichtlich der jeweiligen Betriebszustände der Stromverbrauch ermittelt wird. Insbesondere kann vorgesehen sein, dass für jede Komponente der industriellen Anlage der durch die Komponente benötigte Leistungswert ermittelt wird.

In einem weiteren Schritt wird vorzugsweise wenigstens eine weitere Topologie erstellt, wobei sich die wenigstens eine weitere Topologie von der festgelegten Topologie unterscheidet. Das Erstellen der wenigstens einen weiteren Topologie kann beispielsweise in Form einer Simulation unter Verwendung einer entsprechenden Simulationssoftware durchgeführt werden. So können vorteilhaft verschiedene Kombinationen und Varianten der Topologie getestet werden. Insbesondere kann vorgesehen sein, dass wenigstens zwei oder auch eine Vielzahl an weiteren Topologien erstellt wird.

In einem weiteren Schritt wird vorzugsweise ein jeweiliger weiterer durch die Komponente benötigter Leistungswert für die wenigstens eine weitere Topologie auf Basis der bereitgestellten Daten bestimmt. Auch hier kann vorgesehen sein, dass für jede Komponente der industriellen Anlage jeweils der weitere durch die Komponente benötigte Leistungswert ermittelt wird.

In einem weiteren Schritt werden vorzugsweise die jeweils ermittelten benötigten Leistungswerte der festgelegten Topologie und der wenigstens einen weiteren Topologie im Hinblick auf wenigstens ein Optimierungskriterium analysiert. Beispielsweise kann hierbei auf Basis eines Vergleiches ermittelt werden wie sich die Leistungswerte jeweils voneinander unterscheiden.

In einem weiteren Schritt wird vorzugsweise die optimale Topologie von Komponenten auf Basis eines Ergebnisses des Analysierens ausgewählt. So kann durch das Verfahren gemäß der Erfindung vorteilhaft gezielt auf Basis des Optimierungskriteriums und der wenigstens einen erstellten Topologie eine passende Topologie für einen vorliegenden Anwendungsfall gefunden werden.

Vorteilhafterweise kann im Rahmen der Erfindung vorgesehen sein, dass die festgelegte Topologie eine bestehende industrielle Anlage repräsentiert und das Ermitteln des jeweiligen durch die Komponente benötigten Leistungswerts auf Basis einer Erfassung von Sensordaten in der bestehenden industriellen Anlage durch wenigstens einen Leistungssensor durchgeführt wird, wobei die Sensordaten vorzugsweise gemessene Leistungswerte umfassen. Der wenigstens eine Leistungssensor ist somit insbesondere ausgebildet, um die Leistungswerte der Komponente zu erfassen. Es ist auch denkbar, dass zunächst die benötigten Leistungswerte auf Basis einer Simulation ermittelt werden und anschließend zusätzlich mit den durch den wenigstens einen Leistungssensor erfassten Leistungswerten zusammengeführt werden. Mit diesem Merkmal kann vorteilhaft die bereits bestehende industrielle Anlage im Hinblick auf das Optimierungskriterium verbessert und optimiert werden.

Außerdem ist es von Vorteil, wenn die festgelegte Topologie eine geplante industrielle Anlage repräsentiert und das Ermitteln des jeweiligen durch die Komponente benötigten Leistungswerts auf einer Simulation der geplanten industriellen Anlage basiert, wobei für die Komponente Leistungswerte aus einer jeweiligen Spezifikation der Komponente angenommen werden, insbesondere eine jeweilige Maximalleistung und/oder eine durch die jeweiligen Betriebszustände resultierende Leistung. So kann vorteilhaft bereits vor einem Aufbau der industriellen Anlage mit dem Verfahren gemäß der Erfindung die optimale Topologie für die Anlage gefunden werden. Die durch die jeweiligen Betriebszustände resultierende Leistung kann sich in einem Beispiel daraus ergeben, dass ein Betriebszustand indiziert, dass die Komponente mit einer Leistung von 50% angesteuert wird und daraus kann unter Berücksichtigung der Leistungswerte aus der jeweiligen Spezifikation ein Leistungswert resultieren.

Zudem ist im Rahmen der Erfindung denkbar, dass das Verfahren ferner den folgenden Schritt umfasst:
- Definieren einer geplanten Anwendung der industriellen Anlage.

In einem Beispiel kann die geplante Anwendung sein, dass definiert wird, wie schwer Gegenstände oder Bauteile sind, die auf einem Förderband transportiert oder von einem Roboterarm bewegt werden sollen. Das Ermitteln des jeweiligen durch die Komponente benötigten Leistungswerts kann anschließend ferner auf Basis der definierten geplanten Anwendung durchgeführt werden. So kann das Ermitteln vorteilhaft präziser durchgeführt werden.

Ein weiterer Vorteil im Rahmen der Erfindung ist erzielbar, wenn das wenigstens eine Optimierungskriterium ein Gleichzeitigkeitsfaktor ist, wobei der Gleichzeitigkeitsfaktor angibt, wann und in welchem Ausmaß die Komponenten der industriellen Anlage gleichzeitig aktiv sind. Beispielsweise kann es nachteilhaft sein, wenn in der industriellen Anlage an einem Verteilermodul/Stromkreis ausgeprägte Leistungsspitzen auftreten. Dies kann vorteilhaft durch Berücksichtigung des Gleichzeitigkeitsfaktors und entsprechend angepasster Planung der Energieversorgung/Topologie verhindert oder zumindest verringert werden.

Vorteilhaft ist es zudem, wenn das wenigstens eine Optimierungskriterium eine Eignung der Komponente angibt, wobei die Eignung sich aus einem Verhältnis zwischen einer verfügbaren Leistung der Komponente und einer in der industriellen Anlage verwendeten Leistung der Komponente ergibt. So kann vorteilhaft auf Basis der Eignung ermittelt werden, ob die verwendete Komponente über- oder unterdimensioniert für die Verwendung in der industriellen Anlage ist.

Des Weiteren ist es im Rahmen der Erfindung optional möglich, dass im Rahmen des Erstellens der wenigstens einen weiteren Topologie sich die wenigstens eine weitere Topologie von der festgelegten Topologie in einer Verbindung zwischen einzelnen Komponenten unterscheidet. Die Verbindung kann eine elektrische Verschaltung sein, oder auch eine mechanische oder hydraulische Verbindung. Durch dieses Merkmal können vorteilhaft verschiedene Kombinationen von Komponenten und verschiedene Möglichkeiten der Verbindung zwischen den einzelnen Komponenten durch die wenigstens eine weitere Topologie getestet werden.

Optional kann es vorgesehen sein, dass im Rahmen des Erstellens der wenigstens einen weiteren Topologie sich die wenigstens eine weitere Topologie von der festgelegten Topologie in einer Art der jeweils verwendeten einzelnen Komponente unterscheidet. Die Art ist beispielsweise, welche Art von Motor als Komponente verwendet wird, wobei sich die Art des Motors beispielsweise darin unterscheidet, wieviel Leistung der jeweilige Motor bereitstellt. So kann vorteilhaft differenzierter evaluiert werden, welche Topologie hinsichtlich des Optimierungskriteriums die optimale Topologie ist.

Ein weiterer Vorteil im Rahmen der Erfindung ist erzielbar, wenn das wenigstens eine Optimierungskriterium ein gesamter Leistungswert aller Komponenten der industriellen Anlage ist, wobei im Rahmen des Auswählens die optimale Topologie einen minimalen gesamten Leistungswert aufweist. Alternativ oder daraus abgeleitet kann auch ein gesamter Stromverbrauch aller Komponenten das Optimierungskriterium sein, wobei im Rahmen des Auswählens die optimale Topologie einen minimalen Stromverbrauch aufweist. Durch Verwendung dieses Optimierungskriteriums kann vorteilhaft der gesamte Leistungswert, bzw. der Stromverbrauch, der industriellen Anlage gesenkt werden.

Optional kann es vorgesehen sein, dass das Verfahren ferner die folgenden Schritte umfasst:
- Bereitstellen eines Repräsentationsmodells eines Gebäudes der industriellen Anlage,
- Ermitteln einer jeweiligen Lage und eines jeweiligen Typs von Schnittstellen in dem Gebäude der industriellen Anlage auf Basis des bereitgestellten Repräsentationsmodells.

Die festgelegte Topologie und die wenigstens eine weitere Topologie können dann ferner die Schnittstellen in dem Gebäude der industriellen Anlage berücksichtigen. Das Repräsentationsmodell kann beispielsweise auf einer Lidar-Aufnahme des Gebäudes basieren, oder auf eine vergleichbare Weise erfasst worden sein. Auch ist denkbar, dass das Repräsentationsmodell auf Basis von Kamerabildern erstellt wurde. Das Repräsentationsmodell umfasst insbesondere auch die Abmessungen des Gebäudes sowie Positionen und Abstände zwischen den Schnittstellen. Das Gebäude kann beispielsweise eine Produktionshalle sein. Die Schnittstellen sind insbesondere Anschlüsse wie z.B. Stromanschlüsse. Der Typ der Schnittstelle kann beispielsweise sein, was für ein Stromanschluss vorliegt, also z.B. 400V oder 230V. Durch Berücksichtigung der Schnittstellen kann das Verfahren vorteilhaft differenzierter durchgeführt werden, wodurch eine bessere optimale Topologie gefunden werden kann.

Ebenfalls Gegenstand der Erfindung ist eine Vorrichtung zur Datenverarbeitung, umfassend Mittel zur Ausführung der Schritte des erfindungsgemäßen Verfahrens. Damit bringt die erfindungsgemäße Vorrichtung die gleichen Vorteile mit sich, wie sie ausführlich mit Bezug auf ein erfindungsgemäßes Verfahren beschrieben worden sind.

Ebenfalls Gegenstand der Erfindung ist ein Computerprogramm, insbesondere Computerprogrammprodukt, umfassend Befehle, die bei der Ausführung des Computerprogrammes durch einen Computer diesen veranlassen, das erfindungsgemäße Verfahren auszuführen. Damit bringt das erfindungsgemäße Computerprogramm die gleichen Vorteile mit sich, wie sie ausführlich mit Bezug auf ein erfindungsgemäßes Verfahren beschrieben worden sind.

Als der Computer kann eine Datenverarbeitungsvorrichtung, bspw. die erfindungsgemäße Vorrichtung, vorgesehen sein, welche das Computerprogramm ausführt. Der Computer kann wenigstens einen Prozessor zur Ausführung des Computerprogramms aufweisen. Auch kann ein nicht-flüchtiger Datenspeicher vorgesehen sein, in welchem das Computerprogramm hinterlegt und von welchem das Computerprogramm durch den Prozessor zur Ausführung ausgelesen werden kann.

Ebenfalls ist es denkbar, dass der Computer zumindest einen integrierten Schaltkreis wie einen Mikroprozessor oder eine Anwendungsspezifische integrierte Schaltung (ASIC) oder ein Anwendungsspezifisches Standardprodukt (ASSP) oder einen digitalen Signalprozessor (DSP) oder einen Field Programmable Gate Array (FPGA) oder dergleichen umfasst. Der Computer kann ferner wenigstens eine Schnittstelle zum Datenaustausch, z. B. eine Ethernet-Schnittstelle oder eine Schnittstelle für LAN (Local Area Network) oder WLAN (Wireless Local Area Network) oder System-on-a-Chip (SoC) oder eine andere Funkschnittstelle wie Bluetooth oder Nahfeldkommunikation (NFC) aufweisen. Ferner kann der Computer als ein oder mehrere Steuergeräte, d. h. auch als ein System aus Steuergeräten, ausgeführt sein. Der Computer kann bspw. auch in einer Cloud und/oder als ein Server vorgesehen sein, um über die Schnittstelle die Datenverarbeitung für eine lokale Anwendung zur Verfügung zu stellen. Auch ist es möglich, dass der Computer als ein mobiles Gerät, wie ein Smartphone, ausgeführt ist.

Ebenfalls Gegenstand der Erfindung kann ein computerlesbares Speichermedium sein, welches das erfindungsgemäße Computerprogramm umfasst. Das Speichermedium ist bspw. als ein Datenspeicher wie eine Festplatte und/oder ein nicht-flüchtiger Speicher und/oder eine Speicherkarte ausgebildet. Das Speichermedium kann z. B. in den Computer integriert sein.

Darüber hinaus kann das erfindungsgemäße Verfahren auch als ein computerimplementiertes Verfahren ausgeführt sein.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Fig. 1: eine schematische Darstellung eines Verfahrens, eines Computerprogramms, eines computerlesbaren Speichermediums und einer Vorrichtung zur Datenverarbeitung gemäß Ausführungsbeispielen der Erfindung,
- Fig. 2: eine schematische Darstellung einer industriellen Anlage gemäß Ausführungsbeispielen der Erfindung,
- Fig. 3: ein vergrößerter Ausschnitt der industriellen Anlage gemäß Ausführungsbeispielen der Erfindung.

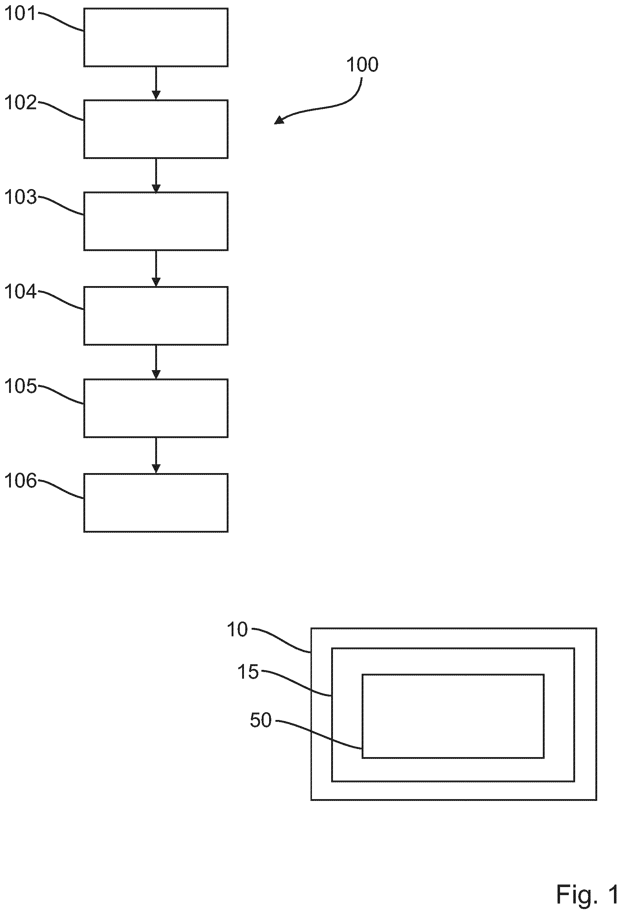

Fig. 1 zeigt ein Verfahren 100, ein Computerprogramm 20, ein computerlesbares Speichermedium 15 sowie eine Vorrichtung zur Datenverarbeitung 10 gemäß Ausführungsbeispielen der Erfindung.

Fig. 1 zeigt insbesondere ein Ausführungsbeispiel für ein Verfahren 100 zum Auswählen einer optimalen Topologie von Komponenten 2 einer elektrotechnischen Installation für eine industrielle Anlage 1. In einem ersten Schritt 101 werden Daten hinsichtlich jeweiliger Betriebszustände einer jeweiligen Komponente 2 auf Basis einer Auswertung von Steuerungsdaten der industriellen Anlage 1 bereitgestellt. In einem zweiten Schritt 102 wird ein jeweiliger durch die Komponente 2 benötigter Leistungswert für eine festgelegte Topologie auf Basis der bereitgestellten Daten ermittelt. In einem dritten Schritt 103 wird wenigstens eine weitere Topologie erstellt, wobei sich die wenigstens eine weitere Topologie von der festgelegten Topologie unterscheidet. In einem vierten Schritt 104 wird ein jeweiliger weiterer durch die Komponente 2 benötigter Leistungswert für die wenigstens eine weitere Topologie auf Basis der bereitgestellten Daten bestimmt. In einem fünften Schritt 105 wird der jeweils ermittelte benötigte Leistungswert der festgelegten Topologie und der wenigstens einen weiteren Topologie im Hinblick auf wenigstens ein Optimierungskriterium analysiert. In einem sechsten Schritt 106 wird die optimale Topologie von Komponenten 2 auf Basis eines Ergebnisses des Analysierens ausgewählt.

Die jeweiligen Betriebszustände der Komponente 2 geben insbesondere an, wie die Komponente 2 während eines Betriebs der industriellen Anlage 1 angesteuert wird. Die Daten geben insbesondere hinsichtlich der Betriebszustände eine Leistung bei der Ansteuerung und/oder einen zeitlichen Verlauf der Ansteuerung an.

Im Rahmen des Erstellens der wenigstens einen weiteren Topologie unterscheidet sich die wenigstens eine weitere Topologie von der festgelegten Topologie insbesondere in einer Verbindung zwischen einzelnen Komponenten 2. Ferner kann sich die wenigstens eine weitere Topologie von der festgelegten Topologie in einer Art der jeweils verwendeten einzelnen Komponente 2 unterscheiden.

Die festgelegte Topologie kann gemäß einer ersten Alternative eine bestehende industrielle Anlage 1 repräsentieren. Das Ermitteln des jeweiligen durch die Komponente 2 benötigten Leistungswerts kann dann auf Basis einer Erfassung von Sensordaten in der bestehenden industriellen Anlage 1 durch wenigstens einen Leistungssensor 3 durchgeführt werden.

Die festgelegte Topologie kann gemäß einer zweiten Alternative eine geplante industrielle Anlage 1 repräsentieren. Das Ermitteln des jeweiligen durch die Komponente 2 benötigten Leistungswerts kann dann auf einer Simulation der geplanten industriellen Anlage 1 basieren, wobei für die Komponente 2 Leistungswerte aus einer jeweiligen Spezifikation der Komponente 2 angenommen werden. Dies kann beispielsweise eine jeweilige Maximalleistung und/oder eine durch die jeweiligen Betriebszustände resultierende Leistung sein.

Das Verfahren 100 kann gemäß Ausführungsbeispielen umfassen, dass eine geplante Anwendung der industriellen Anlage 1 definiert wird. Das Ermitteln des jeweiligen durch die Komponente benötigten Leistungswerts kann dann ferner auf Basis der definierten geplanten Anwendung durchgeführt werden.

Das wenigstens eine Optimierungskriterium kann beispielsweise ein Gleichzeitigkeitsfaktor sein. Der Gleichzeitigkeitsfaktor gibt insbesondere an, wann und in welchem Ausmaß, d.h. beispielsweise mit welcher Leistung oder Geschwindigkeit, die Komponenten 2 der industriellen Anlage 1 gleichzeitig aktiv sind.

Ferner kann das wenigstens eine Optimierungskriterium eine Eignung der Komponente 2 angeben, wobei die Eignung sich aus einem Verhältnis zwischen einer verfügbaren Leistung der Komponente 2 und einer in der industriellen Anlage 1 verwendeten Leistung der Komponente 2 ergibt. Beispielsweise kann eine Komponente 2 eine bestimmte Leistung bereitstellen, die gegebenenfalls über dem liegt, was innerhalb der industriellen Anlage 1 durch die Komponente 2 benötigt wird. In diesem Fall kann eine leistungsschwächere und dadurch kostengünstigere Alternative für die Komponente 2 verwendet werden.

Das wenigstens eine Optimierungskriterium kann auch ein gesamter Leistungswert aller Komponenten 2 der industriellen Anlage 1 sein. In diesem Fall kann im Rahmen des Auswählens 106 die optimale Topologie einen minimalen gesamten Leistungswert aufweisen.

Im Rahmen des Verfahrens 100 gemäß einem Ausführungsbeispiel kann ein Repräsentationsmodell eines Gebäudes 4 der industriellen Anlage 1 bereitgestellt werden. Das Repräsentationsmodell kann eine Aufnahme des Gebäudes 4 sein, wie beispielsweise eine Kamera- oder LiDAR-Aufnahme. Auf Basis des bereitgestellten Repräsentationsmodells können anschließend eine jeweilige Lage und ein jeweiliger Typ von Schnittstellen 5 in dem Gebäude 4 der industriellen Anlage 1 ermittelt werden. Die Schnittstellen 5 sind beispielsweise Stromversorgungsanschlüsse wie Steckdosen. Die festgelegte Topologie und die wenigstens eine weitere Topologie können anschließend ferner die Schnittstellen 5 in dem Gebäude 4 der industriellen Anlage 1 berücksichtigen.

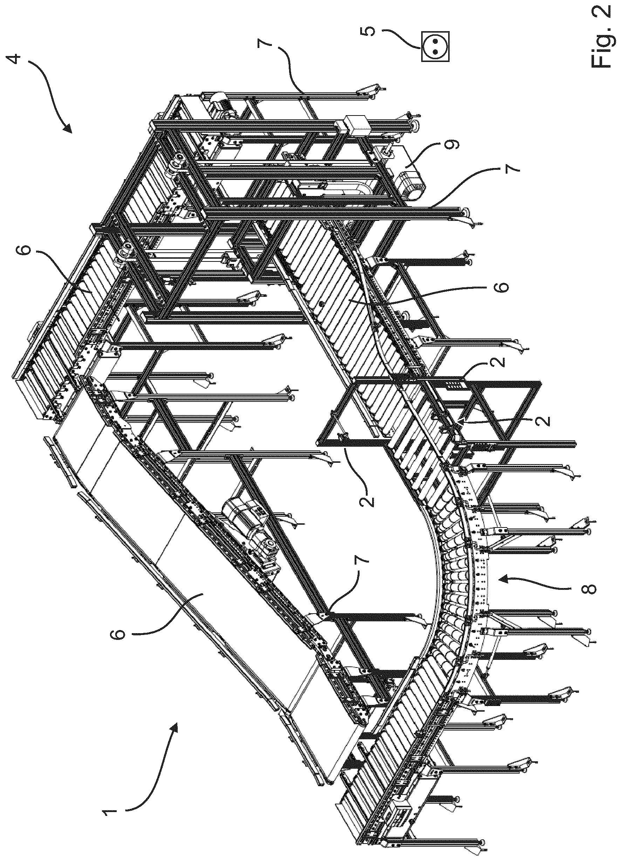

Fig. 2 zeigt eine industrielle Anlage 1 in einem Gebäude 4 gemäß Ausführungsbeispielen der Erfindung. Das Gebäude weist dabei mehrere Schnittstellen 5 auf, die beispielsweise als Stromversorgungsanschlüsse wie Steckdosen ausgebildet sind. Die industrielle Anlage 1 umfasst mehrere ineinandergreifende Förderbänder 6. Die industrielle Anlage 1 dient insbesondere einem Transport von Gütern in einer Produktions- oder Lagerumgebung. Die Förderbänder 6 sind vorzugsweise durchgehend miteinander verbunden und können es ermöglichen, dass die Güter über verschiedene Ebenen transportiert werden. Die Förderbänder 6 sind beispielsweise mit Rollen ausgestattet, die einen reibungslosen Transport der Güter gewährleisten können. Die Förderbänder 6 werden insbesondere von einem Stützrahmen 7 getragen. Dieser Stützrahmen 7 kann vertikale und horizontale Streben umfassen, die die Struktur der industriellen Anlage 1 unterstützen und ihre Stabilität sicherstellen. Ferner umfasst die industrielle Anlage 1 vorzugsweise Kurvensektionen 8, die es ermöglichen, dass die Güter um Ecken und entlang komplexer Pfade innerhalb der industriellen Anlage 1 transportiert werden können. Diese Kurvensektionen 8 sind vorzugsweise ebenfalls mit Rollen ausgestattet, die den Richtungswechsel der Güter ermöglichen. An verschiedenen Stellen der industriellen Anlage 1 befinden sich insbesondere Antriebsmotoren 9, die die Bewegung der Förderbänder 6 antreiben. In der Nähe der Förderbänder 6 sind vorzugsweise verschiedene Komponenten 2 wie beispielsweise Sensoren, Steuerungsgeräte oder Verbindungsmodule angebracht. Die Komponenten 2 überwachen beispielsweise einen Betrieb der industriellen Anlage 1, erfassen Daten zu den transportierten Gütern und steuern den Transportvorgang.

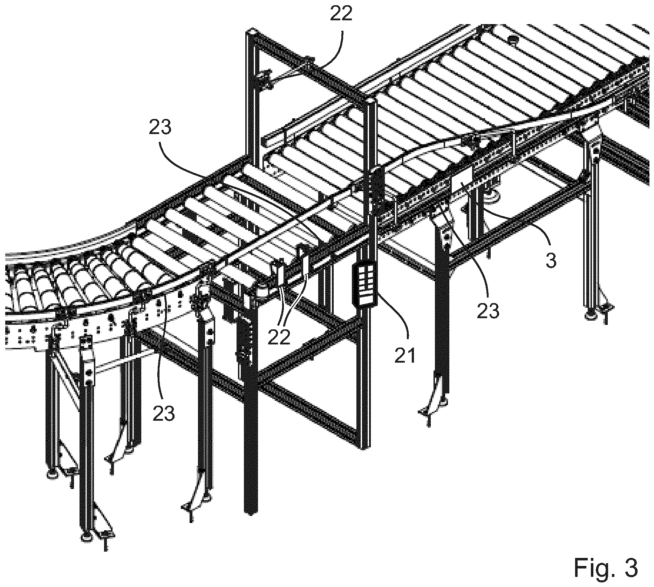

Fig. 3 zeigt einen vergrößerten Ausschnitt der industriellen Anlage 1 aus Fig. 2. Dabei werden verschiedene Komponenten 2 der industriellen Anlage 1 näher dargestellt. Die Komponenten 2 umfassen hierbei ein Verbindungsmodul, insbesondere Bus-Modul, 21, das beispielsweise für einen zulässigen Gesamtstrom an allen Ports von 9 Ampere und eine zulässige Stromstärke pro Port von 4 Ampere ausgelegt ist. Ferner sind als Komponenten 2 drei Sensoren 22 und drei Rollenantriebe 23 vorgesehen. An einem der Rollenantriebe 23 ist ferner ein Leistungssensor 3 angeordnet, der eine Leistung des Rollenantriebs 23 erfasst. Die Sensoren 22 sind beispielsweise derart ausgelegt, dass sie eine maximale Stromstärke von 0,2 Ampere benötigen. Die Rollenantriebe 23 sind beispielsweise derart ausgelegt, dass sie eine Stromstärke von bis zu 4 Ampere bei einer vollen Auslastung benötigen. Um Zusammenstöße zu vermeiden, kann vorgesehen sein, dass die Rollenantriebe 23 immer in einer festen Reihenfolge angesteuert werden, insbesondere nacheinander in Laufrichtung. Die Ansteuerung mit einer bestimmten Auslastung, bzw. Leistung, der Rollenantriebe 23 entspricht insbesondere den Daten hinsichtlich eines jeweiligen Betriebszustands gemäß der Erfindung. Somit laufen insbesondere nie alle drei Rollenantriebe 23 zeitgleich, d.h. die Rollenantriebe 23 weisen vorzugsweise nie simultan dieselben Daten hinsichtlich der jeweiligen Betriebszustände auf. Diese Information hinsichtlich der Daten der jeweiligen Betriebszustände der Rollenantriebe 23 kann auf Basis einer Auswertung von Steuerungsdaten, bzw. Planungsdaten, der industriellen Anlage 1 ermittelt werden. Insbesondere kann diese Information aus einem geschriebenen Steuerungsprogramm der industriellen Anlage 1 automatisiert ausgelesen oder simuliert werden, insbesondere auf Basis eines digitalen Zwillings der industriellen Anlage 1. Dies kann gemäß Ausführungsbeispielen analog auch für weitere Komponenten 2 der industriellen Anlage 1 durchgeführt werden, um die Daten hinsichtlich der Betriebszustände festzustellen. Dadurch kann beispielsweise ermittelt werden, welche der Komponenten 2 gleichzeitig laufen und welche nicht. Alternativ oder zusätzlich kann auch auf Basis einer Analyse historischer Daten hinsichtlich der Betriebszustände der Komponenten 2 festgestellt werden, welche Rollenantriebe 23 oder auch sonstige Komponenten 2 der industriellen Anlage 1 wann und in welchem Ausmaß aktiv sind sowie welche Komponenten 2 jeweils gleichzeitig laufen und welche nicht. Nun kann auf Basis der bereitgestellten Daten hinsichtlich der jeweiligen Betriebszustände ein jeweiliger durch die Komponenten 2 benötigter Leistungswert ermittelt werden. Dabei liegt zunächst eine festgelegte Topologie vor, d.h. insbesondere eine erste Anordnung und Verbindung der einzelnen Komponenten 2. Alternativ kann die festgelegte Topologie auch eine geplante Topologie mit den Komponenten 2 sein. Um den benötigten Leistungswert zu ermitteln, kann die industrielle Anlage 1 wenigstens einen Leistungssensor 3 aufweisen. Anschließend kann wenigstens eine weitere Topologie erstellt werden, die sich von der festgelegten Topologie unterscheidet. Beispielsweise werden in der wenigstens einen weiteren Topologie andere Rollenantriebe 23 verwendet, die eine geringere Stromstärke benötigen oder es werden lediglich andere Verbindungen zwischen den Komponenten 2 vorgesehen. Danach kann ein jeweiliger weiterer durch die Komponenten 2 benötigter Leistungswert für die wenigstens eine weitere Topologie bestimmt werden. Die weiteren Leistungswerte der wenigstens einen weiteren Topologie und die ermittelten Leistungswerte der festgelegten Topologie können nun im Hinblick auf wenigstens ein Optimierungskriterium analysiert werden. Dadurch kann beispielsweise festgestellt werden, dass das Verbindungsmodul 21 mit dem vorgegebenen zulässigen Gesamtstrom und Strom pro Port verwendet werden kann, obwohl beispielsweise ein gleichzeitiger Betrieb aller angeschlossenen Komponenten 2 zu einer Überlastung führen würde. Dies entspricht insbesondere dem Optimierungskriterium der Eignung hinsichtlich des Verbindungsmoduls 21. Ferner kann auf Basis dieser Information eine Optimierung dahingehend durchgeführt werden, dass möglichst wenige Komponenten 2 gleichzeitig aktiv sind, was insbesondere dem Optimierungskriterium des Gleichzeitigkeitsfaktors gemäß Ausführungsbeispielen der Erfindung entspricht. Auch könnte gemäß einem weiteren Optimierungskriterium vorgesehen sein, dass ein gesamter Leistungswert aller Komponenten 2 der industriellen Anlage 1 minimiert werden soll.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

### Bezugszeichenliste

- 1: industrielle Anlage, Anlage
- 2: Komponente
- 3: Leistungssensor
- 4: Gebäude
- 5: Schnittstellen
- 6: Förderband
- 7: Stützrahmen
- 8: Kurvensektion
- 9: Antriebsmotor

- 10: Vorrichtung
- 15: Speichermedium

- 21: Verbindungsmodul
- 22: Sensor
- 23: Rollenantrieb

- 50: Computerprogramm

- 100: Verfahren
- 101: Bereitstellen
- 102: Ermitteln
- 103: Erstellen
- 104: Bestimmen
- 105: Analysieren
- 106: Auswählen

## Patentansprüche

1. Verfahren (100) zum Auswählen einer optimalen Topologie von Komponenten (2) einer elektrotechnischen Installation für eine industrielle Anlage (1), umfassend die nachfolgenden Schritte:
- Bereitstellen (101) von Daten hinsichtlich jeweiliger Betriebszustände einer jeweiligen Komponente (2) auf Basis einer Auswertung von Steuerungsdaten der industriellen Anlage (1),
- Ermitteln (102) eines jeweiligen durch die Komponente (2) benötigten Leistungswerts für eine festgelegte Topologie auf Basis der bereitgestellten Daten,
- Erstellen (103) wenigstens einer weiteren Topologie, wobei sich die wenigstens eine weitere Topologie von der festgelegten Topologie unterscheidet,
- Bestimmen (104) eines jeweiligen weiteren durch die Komponente (2) benötigten Leistungswerts für die wenigstens eine weitere Topologie auf Basis der bereitgestellten Daten,
- Analysieren (105) der jeweils ermittelten benötigten Leistungswerte der festgelegten Topologie und der wenigstens einen weiteren Topologie im Hinblick auf wenigstens ein Optimierungskriterium,
- Auswählen (106) der optimalen Topologie von Komponenten (2) auf Basis eines Ergebnisses des Analysierens.

2. Verfahren (100) nach Anspruch 1,
**dadurch gekennzeichnet,**
**dass** die jeweiligen Betriebszustände der Komponente (2) angeben, wie die Komponente (2) während eines Betriebs der industriellen Anlage (1) angesteuert wird, wobei die Daten hinsichtlich der Betriebszustände eine Leistung bei der Ansteuerung und/oder einen zeitlichen Verlauf der Ansteuerung angeben.

3. Verfahren (100) nach einem der vorhergehenden Ansprüche,
**dadurch gekennzeichnet,**
**dass** die festgelegte Topologie eine bestehende industrielle Anlage (1) repräsentiert und das Ermitteln (102) des jeweiligen durch die Komponente (2) benötigten Leistungswerts auf Basis einer Erfassung von Sensordaten in der bestehenden industriellen Anlage (1) durch wenigstens einen Leistungssensor (3) durchgeführt wird.

4. Verfahren (100) nach einem der Ansprüche 1 oder 2,
**dadurch gekennzeichnet,**
**dass** die festgelegte Topologie eine geplante industrielle Anlage (1) repräsentiert und das Ermitteln (102) des jeweiligen durch die Komponente (2) benötigten Leistungswerts auf einer Simulation der geplanten industriellen Anlage (1) basiert, wobei für die Komponente (2) Leistungswerte aus einer jeweiligen Spezifikation der Komponente (2) angenommen werden, insbesondere eine jeweilige Maximalleistung und/oder eine durch die jeweiligen Betriebszustände resultierende Leistung.

5. Verfahren (100) nach Anspruch 4,
**dadurch gekennzeichnet,**
**dass** das Verfahren (100) ferner den folgenden Schritt umfasst:
- Definieren einer geplanten Anwendung der industriellen Anlage (1),
wobei das Ermitteln (102) des jeweiligen durch die Komponente (2) benötigten Leistungswerts ferner auf Basis der definierten geplanten Anwendung durchgeführt wird.

6. Verfahren (100) nach einem der vorhergehenden Ansprüche,
**dadurch gekennzeichnet,**
**dass** das wenigstens eine Optimierungskriterium ein Gleichzeitigkeitsfaktor ist, wobei der Gleichzeitigkeitsfaktor angibt, wann und in welchem Ausmaß die Komponenten (2) der industriellen Anlage (1) gleichzeitig aktiv sind.

7. Verfahren (100) nach einem der vorhergehenden Ansprüche,
**dadurch gekennzeichnet,**
**dass** das wenigstens eine Optimierungskriterium eine Eignung der Komponente (2) angibt, wobei die Eignung sich aus einem Verhältnis zwischen einer verfügbaren Leistung der Komponente (2) und einer in der industriellen Anlage (1) verwendeten Leistung der Komponente (2) ergibt.

8. Verfahren (100) nach einem der vorhergehenden Ansprüche,
**dadurch gekennzeichnet,**
**dass** im Rahmen des Erstellens (103) der wenigstens einen weiteren Topologie sich die wenigstens eine weitere Topologie von der festgelegten Topologie in einer Verbindung zwischen einzelnen Komponenten (2) unterscheidet.

9. Verfahren (100) nach einem der vorhergehenden Ansprüche,
**dadurch gekennzeichnet,**
**dass** im Rahmen des Erstellens (103) der wenigstens einen weiteren Topologie sich die wenigstens eine weitere Topologie von der festgelegten Topologie in einer Art der jeweils verwendeten einzelnen Komponente (2) unterscheidet.

10. Verfahren (100) nach einem der vorhergehenden Ansprüche,
**dadurch gekennzeichnet,**
**dass** das wenigstens eine Optimierungskriterium ein gesamter Leistungswert aller Komponenten (2) der industriellen Anlage (1) ist, wobei im Rahmen des Auswählens (106) die optimale Topologie einen minimalen gesamten Leistungswert aufweist.

11. Verfahren (100) nach einem der vorhergehenden Ansprüche,
**dadurch gekennzeichnet,**
**dass** das Verfahren (100) ferner die folgenden Schritte umfasst:
- Bereitstellen eines Repräsentationsmodells eines Gebäudes (4) der industriellen Anlage (1),
- Ermitteln einer jeweiligen Lage und eines jeweiligen Typs von Schnittstellen (5) in dem Gebäude (4) der industriellen Anlage (1) auf Basis des bereitgestellten Repräsentationsmodells,
wobei die festgelegte Topologie und die wenigstens eine weitere Topologie ferner die Schnittstellen (5) in dem Gebäude (4) der industriellen Anlage (1) berücksichtigen.

12. Computerprogramm (50), umfassend Befehle, die bei der Ausführung des Computerprogramms (50) durch einen Computer diesen veranlassen, das Verfahren (100) nach einem der vorhergehenden Ansprüche auszuführen.

13. Vorrichtung (10) zur Datenverarbeitung, die eingerichtet ist, das Verfahren (100) nach einem der Ansprüche 1 bis 11 auszuführen.

14. Computerlesbares Speichermedium (15), umfassend Befehle, die bei der Ausführung durch einen Computer (10) diesen veranlassen, die Schritte des Verfahrens (100) nach einem der Ansprüche 1 bis 11 auszuführen.
